# FASCICULE DE BREVET EUROPEEN

(11) **EP 3 727 977 B1**
(45) Date de publication et mention de la délivrance du brevet: **11.11.2026**
(21) Numéro de dépôt: 18827016.9
(22) Date de dépôt: 14.12.2018
(51) Int. Cl.: B60W 30/18, B60W 40/12, B60W 50/00, B60W 50/14, B60W 40/10, B60W 40/107

(54) **SYSTEME DE CALCUL DU COUPLE MINIMUM A LA ROUE D'UN VÉHICULE AUTOMOBILE ET DE DETERMINATION DE L'INSTANT DE LEVÉE DE PIED DE L ACCÉLÉRATEUR, AINSI QUE VÉHICULE**
SYSTEM ZUR BERECHNUNG EINES MINIMALEN RADMOMENTS EINES KRAFTFAHRZEUGS UND ZUR BESTIMMUNG EINES GASWEGNEHM-ZEITPUNKTS, SOWIE FAHRZEUG
SYSTEM FOR COMPUTING THE MINIMUM WHEEL TORQUE OF A VEHICLE AND FOR DETERMINING AN ACCELERATOR-OFF TIMING, AND VEHICLE

(30) Priorité: 21.12.2017 FR 1762845
(43) Date de publication de la demande: 28.10.2020
(73) Titulaire: Horse Powertrain Solutions, S.L., 28108 Alcobenda, Madrid (ES); Nissan Motor Co., Ltd., Yokohama-shi, Kanagawa 221-0023 (JP)
(72) Inventeur: DIAS-PANZA, Rodrigo, 75013 PARIS (FR)
(74) Mandataire: Elzaburu S.L.P.
(86) Numéro de dépôt international: PCT/EP2018/085061
(87) Numéro de publication internationale: WO 2019/121422

(56) Documents cités:
- EP-A1- 2 529 993
- EP-A1- 2 529 993
- WO-A1-2012/088537
- WO-A1-2012/088537
- WO-A1-2015/178838
- WO-A1-2015/178838
- US-B1- 9 738 268
- US-B1- 9 738 268

## Description

L'invention a pour domaine technique la commande du groupe moto-propulseur d'un véhicule automobile, et plus particulièrement la commande du couple à la roue de tels véhicules.

Il existe un problème pour prévoir la décélération du véhicule lors d'un levé de pied pour arriver à une position cible et à une vitesse cible, à partir de l'état actuel du véhicule et des informations sur le parcours provenant du système de navigation.

Pour résoudre ce problème, il existe un besoin pour une détermination prédictive du couple minimum à la roue dû au groupe moto-propulseur dans un véhicule automobile, lors d'un levé de pied de la pédale accélérateur.

De l'état de l'art antérieur, on connaît le document US8855844 B2 et le document US8606459 B2. Toutefois, ces documents ne résolvent pas le problème technique.

Par la publication EP 2 529 993, on connaît aussi un système d'assistance à la conduite de véhicule avec un guidage longitudinal du véhicule. Ce système repose sur un système de contrôle de vitesse prédictif, en fonction d 'informations de trajet anticipées par un système de navigation. La prise de contrôle d'actuateurs, se traduit par une correction de la vitesse de déplacement du véhicule. Les documents WO2012088537 A1 et WO2015178838 A1 décrivent d'autres exemples de contrôle prédictif.

L'invention a pour objet un système de calcul du couple minimum à la roue d'un véhicule automobile, le véhicule étant muni d'au moins un capteur de température du moteur, d'au moins un capteur de température de l'huile de boîte de vitesse, d'au moins un capteur de puissance de l'alternateur, d'au moins un capteur de puissance du système d'air conditionné, d'au moins un calculateur d'aide à la conduite configuré pour transmettre un vecteur de vitesses du véhicule associé à un vecteur de pentes,

Le système de calcul comprend :
un moyen de détermination du rapport engagé fonction de la pente subie par le véhicule et de la vitesse du véhicule provenant du calculateur d'aide à la conduite,
un moyen de détermination d'un ratio entre la vitesse de rotation de l'arbre primaire et la vitesse de rotation de l'arbre secondaire de la chaîne cinématique fonction du rapport engagé,
un moyen de calcul d'une vitesse de rotation de l'arbre secondaire en fonction de la vitesse du véhicule,
un moyen de calcul de la vitesse de rotation de l'arbre primaire en fonction du ratio et de la vitesse de rotation l'arbre secondaire,
un moyen de détermination d'un état d'un mode sailing basé sur un état d'enfoncement d'une pédale d'accélérateur déterminé par un capteur de pédale d'accélérateur,
un moyen de calcul du couple résistif moteur et de la traînée de la boîte de vitesse en fonction de la puissance de l'alternateur, de la puissance du compresseur d'air climatisé, de la température du moteur, de la température de l'huile de boîte de vitesse, du rapport engagé et de la vitesse de rotation de l'arbre primaire, et
un moyen de calcul du couple minimum,
de telle sorte que le système est configuré pour générer un vecteur de couples minimum pour un segment de trajet à venir, dans lequel chaque valeur est associée à une valeur du vecteur de vitesses du véhicule et à une valeur du vecteur de pentes, et où chaque valeur dans le vecteur de couples minimum est calculée à l'aide du moyen de calcul qui détermine le couple minimum en fonction du couple résistif moteur, de la traînée de la boîte de vitesse et de l'état du mode sailing, de telle sorte que :
   - lorsque le mode sailing est désactivé, le couple minimum est égal au couple résistif moteur, et
   - lorsque le mode sailing est activé, le couple minimum est égal à la somme du couple résistif moteur et la traînée de la boîte de vitesse.

En outre, le système peut également comprendre
un moyen de calcul configuré pour déterminer l'occurrence d'un événement sur le trajet à parcourir par le véhicule en fonction de données d'un système de navigation,
un moyen de calcul configuré pour déterminer la distance de l'événement et de la pente en amont de l'événement,
un moyen de calcul configuré pour déterminer la vitesse nécessaire lors du franchissement de l'événement, et
un moyen de calcul configuré pour déterminer un instant de levé de pied de l'accélérateur en fonction de la valeur de couple minium, de la distance de l'événement et de la pente en amont de l'événement.

Le moyen de calcul configuré pour déterminer la distance de l'événement et de la pente en amont de l'événement est également configuré pour déterminer un vecteur de vitesses du véhicule associé à un vecteur de pentes,
le système de calcul du couple minimum étant alors capable de déterminer un vecteur de couples minimum à la roue, dans lequel chaque valeur est associée à une valeur du vecteur de vitesses du véhicule et à une valeur du vecteur de pentes.

Le système de calcul du couple minimum peut être configuré pour déterminer périodiquement un vecteur de valeurs de couples minimum réactualisé en fonction de l'évolution d'au moins un parmi la température du moteur, la température de l'huile de boîte de vitesse, la puissance de l'alternateur, la puissance du compresseur d'air climatisé, et l'état d'enfoncement de la pédale d'accélérateur.

Le moyen de calcul configuré pour déterminer l'instant de levé de pied de l'accélérateur peut également être configuré pour déterminer une valeur de couple minimum à la roue par interpolation des valeurs du vecteur de couples minimum à la roue.

Le véhicule peut comprendre une interface homme machine, dans lequel le moyen de calcul configuré pour déterminer l'instant de levé de pied de l'accélérateur est également configuré pour détermine également la valeur du booléen indiquant si l'indicateur de levé de pied doit être affiché à destination de l'interface homme machine en fonction de l'instant de levé de pied de l'accélérateur déterminé.

L'optimisation du moment d'un levé de pied du conducteur pour réaliser une décélération optimale vers un événement détecté sur la route permet ainsi d'éviter une reprise d'accélération à la suite d'un levé de pied trop précoce ou une utilisation intense des freins suite à un levé de pied trop tardif.

Les avantages comprennent une amélioration de l'agrément de conduite, une réduction de la consommation de carburant, augmentation du temps de régénération d'énergie électrique et une réduction de l'utilisation de freins.

En estimant le couple résistif GMP à la roue, et en ajoutant cette information à celles disponibles auprès de la navigation aux informations liées à la résistance au roulement du véhicule, il est possible de déterminer la décélération optimale et d'avertir le conducteur du moment de levé de pied optimum.

D'autres buts, caractéristiques et avantages de l'invention apparaîtront à la lecture de la description suivante, donnée uniquement à titre d'exemple non limitatif et faite en référence aux dessins annexés sur lesquels :
- la figure 1 illustre les principaux éléments d'un système de calcul du couple minimum à la roue, et
- la figure 2 illustre les principaux éléments d'un système d'information du conducteur de véhicule automobile permettant d'indiquer l'instant de lever de pied en fonction d'un événement de parcours.

Dans l'utilisation courante d'un véhicule, il est normal de constater des phases de décélération du véhicule sans appui frein (« coasting » en langue anglaise). Le conducteur chercher à décélérer de façon plus souple qu'avec une utilisation des freins afin d'atteindre une vitesse cible, et le plus souvent afin d'obtenir cette vitesse cible à un instant donné du parcours, instant au cours duquel le véhicule atteint un événement de parcours donné (courbe, montée, rond-point, péage, etc). Pour réaliser cela, le conducteur lève son pied de la pédale d'accélérateur. Cela peut mener à deux cas de figure.

Dans un premier cas, le levé de pied mène à une coupure de l'alimentation en carburant du groupe motopropulseur, afin de réduire la consommation (et la production de CO₂) et afin de générer du frein moteur.

Dans un deuxième cas, 1e levé de pied mène à l'entrée en mode roues libres (« sailing » en langue anglaise), également appelé idle/stop, qui a pour but de rendre la voiture plus filante, pour profiter au maximum de l'inertie du véhicule, éviter des ré-accélérations du conducteur, et donc également réduire la consommation. L'entrée en mode sailing ne peut se faire que pour les véhicules qui en sont équipés et que si les conditions d'activation sont respectées.

Si l'on utilise les informations du système de navigation embarqué afin de connaître les événement de parcours à venir sur le parcours du véhicule, couplées à une estimation des forces résistives à l'avancement du véhicule (aérodynamique, couple résistif GMP, etc), il est possible de conseiller le conducteur sur un moment optimal de lever de pied de l'accélérateur, afin d'arriver au prochain événement de parcours avec une vitesse cible.

Il faut donc déterminer le moment à partir duquel on conseille au conducteur de lever le pied. Un tel conseil peut être affiché sur l'interface homme machine du véhicule, notamment sous la forme d'un témoin lumineux.

Pour réaliser cela, il faut calculer la décélération du véhicule de façon prédictive par rapport à la position instantanée du véhicule et par rapport à la position de l'événement à venir pour ensuite déterminer le moment à partir duquel on conseille au conducteur de lever le pied

On détermine alors l'évolution des forces résistives à l'avancement du véhicule le long du parcours, par exemple les frottements de l'air et de la route, comprenant notamment la contribution de la topographie.

Une première force résistive est le couple minimum Cmin à la roue dû au groupe motopropulseur GMP. Cette force varie au premier degré en fonction de l'état du mode sailing noté state_sailing, de la vitesse du véhicule Vs, de la pente moyenne %pente, du rapport engagé noté gear et de la consommation énergétique des accessoires Pacc. ${C}_{min} \to f \left(state_sailing,Vs,% pente,gear,{P}_{acc}\right)$ (Eq. 1)

Plus précisément, le couple minimum Cmin est la combinaison de cinq couples, le couple accessoires (C_acc), le couple moteur (C_mot), le couple embrayage (C_emb), le couple boîte de vitesses (C_bv) et le couple pont (C_pont).

Il est ainsi nécessaire de déterminer chacun de ces couples de façon instantanée et de façon prédictive afin de mieux prédire la décélération du véhicule et par conséquence, avertir correctement le conducteur.

Le calcul du couple minimum Cmin est effectué sur la base de plusieurs informations sur la vitesse, la vitesse du véhicule Vs étant constituée par un vecteur vitesse.

Ces informations sur la vitesse sont par exemple des valeurs de vitesse, par exemple de 100 km, 50 km ou 10 km.

On peut ainsi réaliser une projection de la valeur de couple minimum Cprim lorsque la vitesse va évoluer.

Il en est de même en ce qui concerne la pente moyenne.

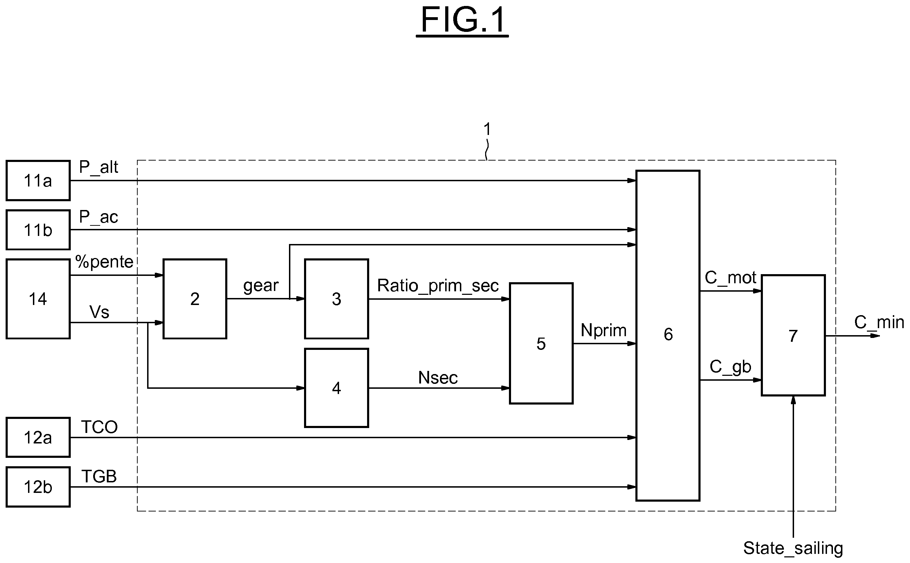

Le système de calcul 1 du couple minimum Cmin, illustré par la figure 1, comprend un moyen de détermination 2 du rapport engagé noté gear fonction de la pente %pente subie par le véhicule et de la vitesse du véhicule Vs, un moyen de détermination 3 d'un ratio entre la vitesse de rotation de l'arbre primaire et la vitesse de rotation de l'arbre secondaire de la chaîne cinématique noté ratio_prim_sec fonction du rapport engagé gear.

Le système de calcul 1 du couple minimum comprend également un moyen de calcul 4 d'une vitesse de rotation de l'arbre secondaire Nsec en fonction de la vitesse du véhicule Vs et un moyen de calcul 5 de la vitesse de rotation de l'arbre primaire Nprim en fonction du ratio ratio_prim_sec et de la vitesse de rotation l'arbre secondaire Nsec.

Un moyen de calcul référencé 6 détermine le couple résistif moteur C_mot et la traînée de la boîte de vitesse C_gb, homogène à un couple, en fonction de la puissance de l'alternateur P_alt, de la puissance du compresseur d'air climatisé P_ac, de la température du moteur TCO, de la température de l'huile de boîte de vitesse TGB, du rapport engagé gear et de la vitesse de rotation de l'arbre primaire Nprim obtenue par exemple à partir du système de rotation Nsec et du rapport de démultiplication de la boîte de vitesses.

La démultiplication de la boîte de vitesses, qui correspond au rapport qui sera engagé, est obtenue à partir de tables qui contiennent des informations de rapport de boîte couramment choisi pour une vitesse et une pente données.

Un moyen de calcul 7 détermine alors le couple minimum C_min en fonction du couple résistif moteur C_mot, de la traînée de la boîte de vitesse C_gb et de l'état du mode sailing state_sailing.

Lorsque le mode sailing est désactivé, le couple minimum C_min est égal au couple résistif moteur C_mot.

Lorsque le mode sailing est activé, le couple minimum C_min est égal à la somme du couple résistif moteur C_mot et la traînée de la boîte de vitesse C_gb.

La prédiction est faite par rapport aux vitesses choisies par le calculateur d'aide à la conduite ADAS (acronyme anglophone pour « Advanced driver assistance system », système avancé d'assistance au conducteur) et par rapport à la pente moyenne devant le véhicule.

Par exemple, on veut savoir quelle valeur prendra le couple minimum Cmin pour une vitesse de 50km/h et une pente positive de 5%.

Pour réaliser cela, le calculateur d'aide à la conduite ADAS transmet les informations de pente %pente et de vitesse Vs au système de calcul 1 du couple minimum qui en déduit le rapport engagé noté gear en fonction de cartographies prédéterminées.

On en déduit ensuite le couple moteur C_mot et la traînée de la boîte de vitesse C_gb en fonction des cartographies embarquées et les couples C_acc, C_bv et C_pont dépendant notamment de la puissance de l'alternateur P_alt, de la puissance du compresseur d'air climatisé P_ac, de la température du moteur TCO, de la température de l'huile de boîte de vitesse TGB, du rapport engagé gear et de la vitesse de rotation de l'arbre primaire Nprim.

Connaissant le couple C_mot et la traînée de la boîte de vitesse C_gb ainsi que l'état du mode sailing, on peut déterminer le couple minimum C_min.

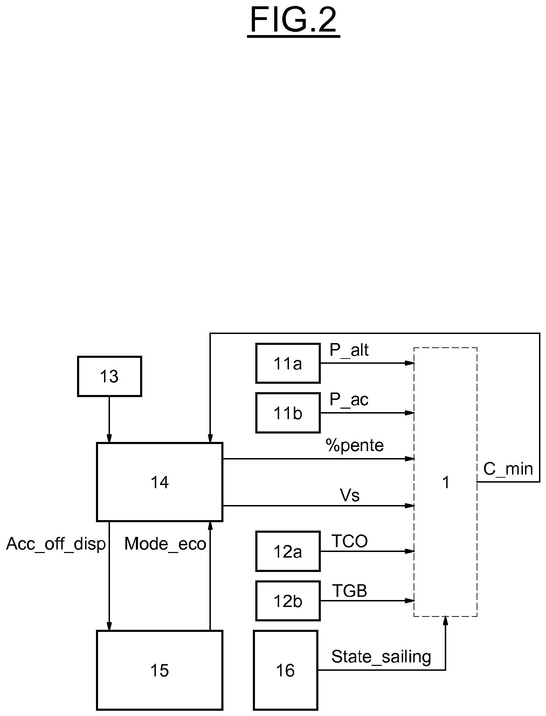

La figure 2 illustre les principaux éléments d'un système d'information du conducteur de véhicule automobile permettant d'indiquer l'instant de lever de pied en fonction d'un événement de parcours.

Un système de calcul 1 du couple minimum détermine un couple minimum Cmin en fonction de valeurs de vitesse Vs et de pente %pente provenant d'un calculateur d'aide à la conduite ADAS 14, de la température du moteur TCO provenant d'un capteur de température 12a et de la température de l'huile de boîte de vitesse TGB provenant d'un capteur de température 12b, de la puissance de l'alternateur P_alt provenant d'un capteur de température 11a et de la puissance du compresseur d'air climatisé P_ac provenant d'un capteur de température 11b, et une valeur de l'état du mode sailing state_sailing provenant d'un moyen de commande du sailing dépendant de l'état d'enfoncement de la pédale d'accélérateur déterminé par un capteur 16 de pédale d'accélérateur.

Le calculateur d'aide à la conduite 14 détermine les valeurs de vitesse Vs et de pente %pente en fonction d'information de navigation provenant d'un système de navigation 13. Par information de navigation, on entend notamment la distance et le dénivelé avant le prochain événement

Le calculateur d'aide à la conduite 14 transmet un vecteur de vitesses du véhicule Vs associé à un vecteur de pentes %pente au système de calcul 1 du couple minimum. Le système de calcul 1 du couple minimum transmet en retour un vecteur de couples minimum dans lequel chaque valeur est associée à une valeur du vecteur de vitesses du véhicule Vs et à une valeur du vecteur de pentes %pente.

Ce calcul est réalisé en temps réel de sorte que le vecteur de valeurs de couples minimum est réactualisé en fonction de l'évolution des entrées du système de calcul 1 du couple minimum autre que le vecteur de vitesses Vs ou de pentes %pente.

Le calculateur d'aide à la conduite 14 est alors apte à déterminer une valeur de couple par interpolation de valeurs disponibles.

Le calculateur d'aide à la conduite 14 détermine également la valeur du booléen Acc_off_disp à destination de l'interface homme machine 15 indiquant si l'indicateur de levé de pied doit être affiché. La valeur du booléen Acc_off_disp est déterminée en fonction du couple minimum C_min, de la distance et de la vitesse d'approche du prochain événement sur le trajet.

## Revendications

1. Système de calcul du couple minimum à la roue d'un véhicule automobile,
le véhicule étant muni d'au moins un capteur de température du moteur (12a), d'au moins un capteur de température de l'huile de boîte de vitesse (12b), d'au moins un capteur de puissance de l'alternateur (11a), d'au moins un capteur de puissance du système d'air conditionné (11b), d'au moins un calculateur d'aide à la conduite (14) configuré pour transmettre un vecteur de vitesses du véhicule (Vs) associé à un vecteur de pentes (%pente),
le système de calcul comprenant:
un moyen de détermination (2) d'un rapport engagé (gear) en fonction de la pente (%pente) et de la vitesse (Vs) du véhicule,
un moyen de détermination (3) d'un ratio (ratio_prim_sec) entre la vitesse de rotation de l'arbre primaire et la vitesse de rotation de l'arbre secondaire de la chaîne cinématique fonction du rapport engagé (gear),
un moyen de calcul (4) d'une vitesse de rotation de l'arbre secondaire (Nsec) en fonction de la vitesse du véhicule (Vs),
un moyen de calcul (5) de la vitesse de rotation de l'arbre primaire (Nprim) en fonction du ratio (ratio_prim_sec) et de la vitesse de rotation l'arbre secondaire (Nsec),
un moyen de détermination d'un état d'un mode sailing (state_sailing) basé sur un état d'enfoncement d'une pédale d'accélérateur déterminé par un capteur de pédale d'accélérateur (16)
un moyen de calcul (6) du couple résistif moteur (C_mot) et de la traînée de la boîte de vitesse (C_gb) en fonction de la puissance de l'alternateur (P_alt), de la puissance du compresseur d'air climatisé (P_ac), de la température du moteur (TCO), de la température de l'huile de boîte de vitesse (TGB), du rapport engagé (gear) et de la vitesse de rotation de l'arbre primaire (Nprim), et
un moyen de calcul (7) du couple minimum (C_min),
**caracterisé en ce que** le système est configuré pour générer un vecteur de couples minimum (C_min) pour un segment de trajet à venir, dans lequel chaque valeur est associée à une valeur du vecteur de vitesses du véhicule (Vs) et à une valeur du vecteur de pentes (%pente), et où chaque valeur dans le vecteur de couples minimum (C_min) est calculée à l'aide du moyen de calcul (7) qui détermine le couple minimum (C_min) en fonction du couple résistif moteur (C_mot), de la traînée de la boîte de vitesse (C_gb) et de l'état du mode sailing (state_sailing), de telle sorte que :
- lorsque le mode sailing est désactivé, le couple minimum (C_min) est égal au couple résistif moteur (C_mot),
et
- lorsque le mode sailing est activé, le couple minimum (C_min) est égal à la somme du couple résistif moteur (C_mot) et de la traînée de la boîte de vitesse (C_gb).

2. Système selon la revendication 1,
le véhicule étant en outre muni d'un système de navigation (13),
et le système comprenant :
un moyen de calcul configuré pour déterminer l'occurrence d'un événement sur le trajet à parcourir par le véhicule en fonction de données du système de navigation,
un moyen de calcul configuré pour déterminer la distance de l'événement et de la pente en amont de l'événement,
un moyen de calcul configuré pour déterminer la vitesse nécessaire lors du franchissement de l'événement, et
un moyen de calcul configuré pour déterminer un instant de levé de pied de l'accélérateur en fonction de la valeur de couple minium, de la distance de l'événement et de la pente en amont de l'événement.

3. Système selon la revendication 2, dans lequel le système de calcul (1) du couple minimum est configuré pour déterminer périodiquement un vecteur de valeurs de couples minimum réactualisé en fonction de l'évolution d'au moins un parmi la température du moteur (TCO), la température de l'huile de boîte de vitesse (TGB), la puissance de l'alternateur (P_alt), la puissance du compresseur d'air climatisé (P_ac), et l'état d'enfoncement de la pédale d'accélérateur.

4. Système selon l'une quelconque des revendications 2 ou 3, dans lequel le moyen de calcul configuré pour déterminer l'instant de levé de pied de l'accélérateur est également configuré pour déterminer une valeur de couple minimum à la roue par interpolation des valeurs du vecteur de couples minimum à la roue.

5. Système selon l'une quelconque des revendications 2 ou 3, dans lequel le véhicule comprend une interface homme machine (15) du véhicule, dans lequel le moyen de calcul configuré pour déterminer l'instant de levé de pied de l'accélérateur est également configuré pour détermine également la valeur du booléen indiquant si l'indicateur de levé de pied doit être affiché à destination de l'interface homme machine (15) en fonction de l'instant de levé de pied de l'accélérateur déterminé.

6. Véhicule automobile étant muni d'au moins un capteur de température du moteur (12a), d'au moins un capteur de température de l'huile de boîte de vitesse (12b), d'au moins un capteur de puissance de l'alternateur (11a), d'au moins un capteur de puissance du système d'air conditionné (11b), d'au moins un calculateur d'aide à la conduite (14) configuré pour transmettre un vecteur de vitesses du véhicule (Vs) associé à un vecteur de pentes (%pente), d'un système de navigation (13), d'un capteur de pédale d'accélérateur (16) et d'une interface homme machine (15),
ledit véhicule comprenant un système selon l'une quelconque des revendications 1 à 5.

## Patentansprüche

1. System zum Berechnen des minimalen Drehmoments am Rad eines Kraftfahrzeugs,
wobei das Fahrzeug mit mindestens einem Motortemperatursensor (12a), mindestens einem Getriebeöltemperatursensor (12b), mindestens einem Sensor für die Lichtmaschinenleistung (11a), mindestens einem Sensor für die Klimaanlagenleistung (11b), mindestens einem Fahrerassistenzrechner (14) ausgestattet ist, der konfiguriert ist, einen Fahrzeuggeschwindigkeitsvektor (Vs) in Verbindung mit einem Steigungsvektor (%Steigung) zu übertragen,
wobei das System zum Berechnen umfasst:
ein Mittel (2) zum Bestimmen eines eingelegten Ganges (Getriebe) in Abhängigkeit von der Steigung (%Steigung) und der Geschwindigkeit (Vs) des Fahrzeugs,
ein Mittel zum Bestimmen (3) eines Verhältnisses (Ratio_prim_sec) zwischen der Rotationsgeschwindigkeit der Primärwelle und der Rotationsgeschwindigkeit der Sekundärwelle des Antriebsstrangs in Abhängigkeit vom eingelegten Gang (Getriebe),
ein Mittel (4) zum Berechnen einer Drehzahl der Sekundärwelle (Nsec) in Abhängigkeit von der Fahrzeuggeschwindigkeit (Vs),
ein Mittel zum Berechnen (5) der Rotationsgeschwindigkeit der Primärwelle (Nprim) in Abhängigkeit vom Verhältnis (Ratio_prim_sec) und der Rotationsgeschwindigkeit der Sekundärwelle (Nsec),
ein Mittel zur Bestimmung eines Zustands eines Sailing-Modus (state_sailing) auf der Grundlage eines Gaspedalbetätigungszustands, der durch einen Gaspedalsensor (16) bestimmt wird,
ein Mittel zum Berechnen (6) des Widerstandsmoments (C_mot) und des Widerstands des Getriebes (C_gb) in Abhängigkeit von der Leistung der Lichtmaschine (P_alt), der Leistung des Klimaanlagenkompressors (P_ac), der Motortemperatur (TCO), der Getriebeöltemperatur (TGB), dem eingelegten Gang (Gear) und der Drehzahl der Primärwelle (Nprim) sowie
ein Mittel (7) zum Berechnen des Mindestdrehmoments (C_min),
**dadurch gekennzeichnet, dass** das System konfiguriert ist, einen minimalen Drehmomentvektor (C_min) für ein zukünftiges Streckensegment zu erzeugen, wobei jeder Wert einem Wert des Fahrzeuggeschwindigkeitsvektors (Vs) und einem Wert des Steigungsvektors (%Steigung) zugeordnet ist, und wobei jeder Wert im minimalen Drehmomentvektor (C_min) mit dem Mittel zum Berechnen (7) berechnet wird, das das minimale Drehmoment (C_min) in Abhängigkeit vom Widerstandsmoment des Motors (C_mot), dem Widerstandsmoment des Getriebes (C_gb) und dem Zustand des Sailing-Modus (state_sailing) bestimmt, so dass:
- wenn der Sailing-Modus deaktiviert ist, das Mindestdrehmoment (C_min) dem Widerstandsmoment des Motors (C_mot) entspricht und
- wenn der Sailing-Modus aktiviert ist, das minimale Drehmoment (C_min) der Summe aus dem Widerstandsmoment des Motors (C_mot) und dem Widerstandsmoment des Getriebes (C_gb) entspricht.

2. System nach Anspruch 1, wobei das Fahrzeug darüber hinaus mit einem Navigationssystem (13) ausgestattet ist, wobei das System umfasst:
ein Mittel zum Berechnen, das konfiguriert ist, das Auftreten eines Ereignisses auf der Fahrstrecke des Fahrzeugs auf der Grundlage von Daten des Navigationssystems zu bestimmen,
ein Mittel zum Berechnen, das konfiguriert ist, den Abstand des Ereignisses und die Steigung der Strecke vor dem Ereignis zu bestimmen,
ein Mittel zum Berechnen, das konfiguriert ist, die erforderliche Geschwindigkeit beim Passieren des Ereignisses zu bestimmen, und
ein Mittel zum Berechnen, das konfiguriert ist, einen Zeitpunkt für das Anheben des Fußes vom Gaspedal in Abhängigkeit vom Wert des Mindestdrehmoments, der Entfernung des Ereignisses und der Steigung der Strecke vor dem Ereignis zu bestimmen.

3. System nach Anspruch 2, wobei das System zum Berechnen (1) des minimalen Drehmoments konfiguriert ist, periodisch einen Wertvektor für das minimale Drehmoment zu bestimmen, der in Abhängigkeit von der Änderung mindestens eines der folgenden Werte aktualisiert wird, Motortemperatur (TCO), Getriebeöltemperatur (TGB), Leistung der Lichtmaschine (P_alt), Leistung des Klimaanlagenkompressors (P_ac) und Gaspedalbetätigungszustand.

4. System nach einem der Ansprüche 2 oder 3, wobei das Mittel zum Berechnen, das konfiguriert ist, den Zeitpunkt des Anhebens des Fußes vom Gaspedal zu bestimmen, ebenso konfiguriert ist, einen minimalen Drehmomentwert am Rad durch Interpolation der Werte des minimalen Drehmomentvektors am Rad zu bestimmen.

5. System nach einem der Ansprüche 2 oder 3, wobei das Fahrzeug eine Mensch-Maschine-Schnittstelle (15) des Fahrzeugs umfasst, wobei das Mittel zum Berechnen, das konfiguriert ist, den Zeitpunkt des Anhebens des Fußes vom Gaspedal zu bestimmen, gleichfalls konfiguriert ist, auch den booleschen Wert zu bestimmen, der angibt, ob der Fußhebeindikator für die Mensch-Maschine-Schnittstelle (15) in Abhängigkeit von dem bestimmten Zeitpunkt des Anhebens des Fußes vom Gaspedal angezeigt werden soll.

6. Kraftfahrzeug, das mit mindestens einem Motortemperatursensor (12a), mindestens einem Getriebeöltemperatursensor (12b), mindestens einem Sensor für die Leistung der Lichtmaschine (11a), mindestens einem Sensor für die Klimaanlagenleistung (11b), mindestens einem Fahrerassistenzrechner (14), der zur Übertragung eines Fahrzeuggeschwindigkeitsvektors (Vs) in Verbindung mit einem Steigungsvektor (%Steigung) konfiguriert ist, einem Navigationssystem (13), einem Gaspedalsensor (16) und einer Mensch-Maschine-Schnittstelle (15) ausgestattet ist, wobei das Fahrzeug ein System nach einem der Ansprüche 1 bis 5 umfasst.

## Claims

1. System for computing the minimum wheel torque of a vehicle and for determining an accelerator-off timing, and vehicle,
the vehicle being fitted with at least one engine temperature sensor (12a), at least one transmission oil temperature sensor (12b), at least one alternator power sensor (11a), at least one air conditioning system power sensor (11b), at least one driver assistance computer (14) configured to transmit a vehicle speed vector (Vs) associated with a slope vector (%slope),
the system for computing:
a means of determining (2) a (gear) engaged according to the slope (%slope) and the speed (Vs) of the vehicle,
a means of determining (3) a ratio (ratio_prim_sec) between the speed of rotation of the primary shaft and the speed of rotation of the secondary shaft of the drive chain according to the (gear) engaged,
a means of computing (4) the speed of rotation of the secondary shaft (Nsec) according to the vehicle speed (Vs),
a means of computing (5) the speed of rotation of the primary shaft (Nprim) according to the ratio (ratio_prim_sec) and the speed of rotation of the secondary shaft (Nsec),
a means of determining a sailing mode state (state_sailing) based on an accelerator pedal depression state determined by an accelerator pedal sensor (16)
a means of computing (6) the engine resistive torque (C_mot) and the gearbox drag (C_gb) according to the alternator power (P_alt), the air conditioning compressor power (P_ac), the engine temperature (TCO), the transmission oil temperature (TGB), the gear engaged and the speed of rotation of the primary shaft (Nprim), and
a means of computing (7) the minimum torque (C_min),
**characterised in that** the system is configured to generate a minimum torque vector (C_min) for an upcoming travel segment, wherein each value is associated with a value of the vehicle speed vector (Vs) and a value of the slope vector (%slope), and wherein each value in the minimum torque vector (C_min) is computed using the computing means (7) that determines the minimum torque (C_min) as a function of the engine resistive torque (C_mot), the gearbox drag (C_gb) and the sailing mode state (state_sailing), such that:
- when sailing mode is deactivated, the minimum torque (C_min) is equal to the engine resistive torque (C_mot), and
- when the sailing mode is activated, the minimum torque (C_min) is equal to the sum of the engine resistive torque (C_mot) and the gearbox drag (C_gb).

2. System according to claim 1, the vehicle being further provided with a navigation system (13), and the system comprising:
a computing means configured to determine the occurrence of an event on the route to be travelled by the vehicle based on data from the navigation system,
a computing means configured to determine the distance of the event and the slope upstream of the event,
a computing means configured to determine the speed required when crossing the event,
and
a computing means configured to determine an accelerator foot lift time as a function of the minimum torque value, the event distance, and the upstream slope of the event.

3. System according to claim 2, wherein the system (1) for computing the minimum wheel torque is configured to periodically determine a vector of minimum torque values updated as a function of the evolution of at least one of the engine temperatures (TCO), the transmission oil temperature (TGB), the alternator power (P_alt), the air conditioning compressor power (P_ac), and the accelerator pedal depression state.

4. System according to any one of claims 2 or 3, wherein the computing means configured to determine the accelerator foot lift time is also configured to determine a minimum torque value at the wheel by interpolating the values of the minimum torque vector at the wheel.

5. System according to any one of claims 2 or 3, wherein the vehicle comprises a vehicle man-machine interface (15), wherein the computing means configured to determine the accelerator foot lift time is also configured to also determine the boolean value indicating whether the foot lift indicator is to be displayed to the man-machine interface (15) based on the determined accelerator foot lift time.

6. Automotive vehicle being provided with at least one engine temperature sensor (12a), at least one transmission oil temperature sensor (12b), at least one alternator power sensor (11a), at least one air conditioning system power sensor (11b), at least one driver assistance computer (14) configured to transmit a vehicle speed vector (Vs) associated with a slope vector (%slope), a navigation system (13), an accelerator pedal sensor (16) and a man-machine interface (15), said vehicle comprising a system according to any one of claims 1 to 5.
